# FASCICULE DE BREVET EUROPEEN

(11) **EP 4 277 801 B1**
(45) Date de publication et mention de la délivrance du brevet: **03.07.2024**
(21) Numéro de dépôt: 23717916.3
(22) Date de dépôt: 06.04.2023
(51) Int. Cl.: B60K 15/035

(54) **DISPOSITIF DE STOCKAGE DE CARBURANT COMPRENANT UN DISPOSITIF DE GESTION DE GAZ ISSUS D'UN CANISTER**
KRAFTSTOFFSPEICHERVORRICHTUNG MIT EINER VORRICHTUNG ZUR VERWALTUNG VON GASEN AUS EINEM KANISTER
FUEL STORAGE DEVICE COMPRISING A DEVICE FOR MANAGING GASES FROM A CANISTER

(30) Priorité: 07.04.2022 LU 501816
(43) Date de publication de la demande: 22.11.2023
(73) Titulaire: Plastic Omnium Advanced Innovation And Research, 1200 Bruxelles (BE)
(72) Inventeur: MADOUX, Dominique, 1200 Bruxelles (BE); SHIN, Changwook, 1200 Bruxelles (BE)
(74) Mandataire: LLR
(86) Numéro de dépôt international: PCT/EP2023/059161
(87) Numéro de publication internationale: WO 2023/194543

(56) Documents cités:
- EP-A2- 1 124 053
- EP-A2- 1 359 311
- DE-A1- 10 317 583
- US-A- 5 957 113
- US-A1- 2011 214 646
- US-A1- 2012 260 892

## Description

L'invention concerne les dispositifs de stockage de carburant de véhicule automobile et plus précisément les dispositifs de gestion d'un mélange d'air et de vapeurs d'hydrocarbures issu de ce dispositif de stockage de carburant. L'invention concerne également un procédé de gestion d'un mélange d'air et de vapeurs d'hydrocarbures issu du dispositif de stockage de carburant selon l'invention.

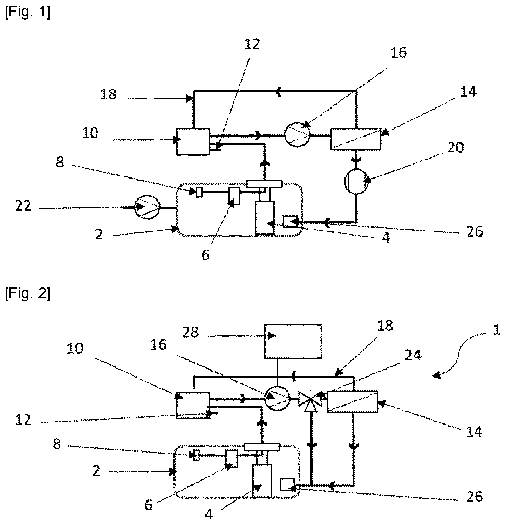

La figure 1 illustre un dispositif de stockage de carburant selon l'art antérieur.

Le carburant peut être stocké dans un réservoir de carburant 2. Ce dernier comprend une pompe à carburant 4, un dispositif de limite de remplissage en carburant 6 et un dispositif d'aération 8. Ces éléments sont connus et ne feront pas l'objet d'une description détaillée dans la présente demande.

Un canister 10 logeant un filtre est relié fluidiquement au réservoir de carburant 2 et collecte les vapeurs d'hydrocarbures provenant du réservoir de carburant 2, le filtre comprend par exemple du charbon actif emprisonnant ces vapeurs d'hydrocarbures, le canister 10 comprend en outre une prise d'air 12 permettant l'entrée ou la sortie d'air du canister 10.

Il est nécessaire de purger régulièrement le canister 10. Pour cela, il est possible d'utiliser une unité de séparation 14 d'un mélange d'air et de vapeurs d'hydrocarbures avec une pompe de purge 16 du canister 10 placée sur la liaison fluidique entre le canister 10 et l'unité de séparation 14. L'unité de séparation 14 est également reliée fluidiquement au réservoir de carburant 2. Une ligne de retour 18 relie fluidiquement l'unité de séparation 14 au canister 10 par une liaison fluidique autre que celle portant la pompe de purge 16. Une pompe à vide 20 est placée sur la liaison fluidique entre l'unité de séparation 14 et le réservoir de carburant 2.

Le fonctionnement du dispositif décrit ci-dessus est le suivant : lorsqu'il est nécessaire de purger le canister 10, la pompe de purge 16 est activée et permet d'extraire du canister 10 un mélange d'air et de vapeurs d'hydrocarbures (vapeurs ayant été captées par le charbon actif du canister 10) pour les acheminer à l'unité de séparation 14. Cette unité de séparation 14 va séparer le mélange reçu en deux fractions : une fraction riche en hydrocarbures et une fraction pauvre en vapeurs d'hydrocarbures. La fraction riche en hydrocarbures est envoyée au réservoir de carburant 2. La pompe à vide 20 disposée sur la liaison fluidique reliant l'unité de séparation 14 au réservoir de carburant 2 permet de créer un différentiel de pression en amont et en aval de l'unité de séparation 14. La fraction pauvre en vapeurs d'hydrocarbures est envoyée au canister 10 par la ligne de retour 18.

En parallèle de ce mécanisme de purge du canister, une pompe de diagnostic 22 est reliée au réservoir pour réaliser un diagnostic embarqué de l'étanchéité du réservoir de carburant 2 (ou OBD pour « On Board Diagnostics » en anglais). Cette pompe de diagnostic 22 permet, lorsque cela est désiré, d'augmenter la pression à l'intérieur du réservoir de carburant 2. L'évolution de cette pression est contrôlée afin de vérifier l'absence de fuite au niveau du réservoir de carburant 2.

L'architecture décrite plus haut présente un inconvénient en termes de complexité, en intégrant un nombre non négligeable de pompes et de systèmes dédiés à une seule application.

Le document DE 103 17 583 A1 divulgue un dispositif de stockage de carburant de véhicule automobile comprenant un réservoir de carburant, un canister relié au réservoir de carburant, une pompe de purge du canister et un ensemble d'unités de séparation. Des électrovannes permettent de guider un mélange d'air et de vapeurs d'hydrocarbures issu du canister vers une unité de séparation ou une autre en fonction de la concentration en vapeurs d'hydrocarbures dans le mélange extrait du canister.

L'invention a notamment pour but de fournir un dispositif de stockage de carburant moins complexe et nécessitant moins de composants que selon l'art antérieur.

A cet effet, l'invention a pour objet un dispositif de stockage de carburant de véhicule automobile comprenant :
- un réservoir de carburant,
- un canister relié fluidiquement au réservoir de carburant et configuré pour recevoir un mélange d'air et de vapeurs d'hydrocarbures provenant du réservoir de carburant,
- au moins une unité de séparation reliée fluidiquement au canister et au réservoir de carburant, l'unité de séparation étant configurée pour recevoir le mélange d'air et de vapeurs d'hydrocarbures provenant du canister et pour séparer ledit mélange en une fraction riche en hydrocarbures et une fraction pauvre en hydrocarbures, la fraction riche en hydrocarbures étant envoyée vers le réservoir de carburant,
- des moyens de retour de la fraction pauvre en hydrocarbures vers le canister,
- une pompe de purge du canister disposée entre le canister et l'unité de séparation,
- au moins une électrovanne disposée entre la pompe de purge et l'unité de séparation, ladite au moins une électrovanne étant configurée pour envoyer sélectivement le mélange d'air et de vapeurs d'hydrocarbures soit à l'unité de séparation, soit directement au réservoir de carburant.

Ainsi, on utilise au moins une électrovanne pour guider le mélange d'air et de vapeurs d'hydrocarbures vers l'unité de séparation en cas de purge du canister, comme expliqué ci-avant, ou directement vers le réservoir de carburant en cas de diagnostic de l'étanchéité de ce dernier, là encore comme expliqué précédemment. Dès lors, une seule pompe, en l'occurrence la pompe de purge, est suffisante pour permettre à la fois une purge du canister et un diagnostic de l'étanchéité du réservoir. Il est dès lors possible de supprimer la pompe de diagnostic et la ligne de communication fluidique dédiées au diagnostic embarqué du réservoir de carburant. On obtient dès lors une architecture simplifiée et comprenant moins de composant que selon l'art antérieur.

Suivant d'autres caractéristiques optionnelles du dispositif de stockage prises seules ou en combinaison :
- l'unité de séparation peut être une unité de séparation membranaire. Il s'agit dès lors d'utiliser un type d'unité de séparation éprouvé pour réaliser la purge du canister ;
- la pompe de purge peut former en outre un compresseur du mélange d'air et de vapeurs d'hydrocarbures provenant du canister. Ainsi, il est possible de supprimer la pompe à vide utilisée dans l'art antérieur, la présence d'un compresseur permettant d'assurer un différentiel de pression en amont et en aval de l'unité de séparation (avec une pression en amont supérieure à la pression en aval) de sorte à améliorer la diffusion du mélange d'air et de vapeurs d'hydrocarbures, principalement des vapeurs d'hydrocarbures, à travers l'unité de séparation ;
- ladite au moins une électrovanne peut être une électrovanne trois voies. On obtient donc une architecture avec une seule vanne pour le guidage du mélange d'air et de vapeurs d'hydrocarbures ;
- ladite au moins une électrovanne peut comprendre deux électrovannes, une première électrovanne reliant la pompe de purge au réservoir de carburant et une seconde électrovanne reliant la pompe de purge à l'unité de séparation. Il s'agit d'une architecture alternativement pour la gestion du mélange d'air et de vapeurs d'hydrocarbures issu du canister ;
- la pompe de purge peut avoir un débit nominal compris entre 5 et 25 litres par minute. Cela permet à la pompe d'assurer les différentes fonctions précitées ;
- le dispositif de stockage de carburant peut comprendre une unité de contrôle électronique de l'état de fonctionnement de la pompe de purge ainsi que de la configuration d'ouverture de ladite au moins une électrovanne. Cela permet d'assurer une gestion combinée de la pompe de purge et de l'électrovanne en fonction d'une nécessité de purge du canister ou de diagnostic de l'étanchéité du réservoir de carburant ;
- le dispositif de stockage peut comprendre plusieurs unités de séparation montées en série, une première unité de séparation étant configurée pour recevoir un mélange d'air et de vapeurs d'hydrocarbures provenant du canister, au moins une seconde unité de séparation étant configurée pour recevoir une première fraction pauvre en hydrocarbures provenant d'une autre unité de séparation et pour séparer ladite fraction pauvre en une seconde fraction riche en hydrocarbures et une seconde fraction pauvre en hydrocarbures, la fraction riche en hydrocarbures étant envoyée vers le réservoir de carburant. Il s'agit ici d'optimiser la filtration du mélange d'air et de vapeurs d'hydrocarbures en n'envoyant au réservoir de carburant qu'une fraction dépourvue au maximum de vapeurs d'hydrocarbures et en envoyant la fraction la plus riche en vapeurs d'hydrocarbures vers le réservoir de carburant ;
- le dispositif de stockage peut comprendre plusieurs unités de séparation montées en parallèle, chaque unité de séparation étant configurée pour recevoir une fraction d'un mélange d'air et de vapeurs d'hydrocarbures provenant du canister et pour séparer ladite fraction de mélange d'air et de vapeurs d'hydrocarbures en une fraction riche en hydrocarbures et une fraction pauvre en hydrocarbures, ladite fraction riche en hydrocarbures étant envoyée vers le réservoir de carburant et ladite fraction pauvre en hydrocarbures étant envoyée vers le canister. Cela permet de traiter un plus grand volume de mélange d'air et de vapeurs d'hydrocarbures de manière simultanée ; et
- le dispositif de stockage peut comprendre une troisième électrovanne disposée sur une liaison fluidique entre le réservoir de carburant et le canister. Cela permet de bloquer la communication fluidique entre le réservoir de carburant et le canister lors du diagnostic de l'étanchéité du réservoir de carburant.

L'invention a également pour objet un procédé de gestion d'un mélange d'air et de vapeurs d'hydrocarbures issu d'un canister d'un dispositif de stockage de carburant selon l'une quelconque des revendications précédentes, le procédé comprenant les étapes suivantes :
- contrôle de la configuration d'ouverture de ladite au moins une électrovanne pour permettre le passage sélectif du mélange d'air et de vapeurs d'hydrocarbures soit directement vers le réservoir de carburant en cas de test d'étanchéité du réservoir, soit vers l'unité de séparation en cas de purge du canister,
- activation de la pompe de purge du canister, et
- acheminement du mélange d'air et de vapeurs d'hydrocarbures du canister soit à l'unité de séparation, soit directement au réservoir de carburant en fonction de la configuration d'ouverture de ladite au moins une électrovanne.

Il s'agit ici de la matérialisation de la gestion du mélange d'air et de vapeurs d'hydrocarbures par le dispositif de stockage de carburant décrit précédemment.

Suivant d'autres caractéristiques optionnelles du procédé de gestion prises seules ou en combinaison :
- le procédé peut comprendre une étape d'activation du compresseur de la pompe de purge lorsque ladite au moins une électrovanne est configurée pour permettre le passage du mélange d'air et de vapeurs d'hydrocarbures du canister à l'unité de séparation. Cela permet, en cas de purge du canister, d'obtenir le différentiel de pression décrit plus haut ; et
- le procédé peut comprendre une étape de fermeture d'une troisième électrovanne disposée sur une liaison fluidique entre le réservoir de carburant et le canister lorsque ladite au moins une électrovanne est configurée pour permettre le passage du mélange d'air et de vapeurs d'hydrocarbures du canister au réservoir de carburant. Cette étape permet d'augmenter la pression au sein du réservoir de carburant en cas de diagnostic de l'étanchéité de ce dernier.

L'invention a également pour objet un dispositif de gestion d'un mélange d'air et de vapeurs d'hydrocarbures issu d'un canister de véhicule automobile, le dispositif de gestion comprenant :
- au moins une unité de séparation d'air et de vapeurs d'hydrocarbures configurée pour recevoir le mélange d'air et de vapeurs d'hydrocarbures provenant du canister et pour séparer ledit mélange en une fraction riche en hydrocarbures et une fraction pauvre en hydrocarbures, la fraction riche en hydrocarbures étant envoyée à un réservoir de carburant,
- une pompe de purge du canister configurée pour envoyer le mélange d'air et de vapeurs d'hydrocarbures du canister à l'unité de séparation, et
- au moins une électrovanne disposée entre la pompe de purge et l'unité de séparation, ladite au moins une électrovanne étant configurée pour envoyer sélectivement le mélange d'air et de vapeurs d'hydrocarbures soit à l'unité de séparation, soit directement au réservoir de carburant.

Il s'agit de la partie du dispositif de stockage de carburant de véhicule automobile spécifiquement dédiée à la gestion du mélange d'air et de vapeurs d'hydrocarbures issu du canister.

### Brève description des figures

L'invention sera mieux comprise à la lecture de la description qui va suivre donnée uniquement à titre d'exemple et faite en se référant aux dessins annexés dans lesquels :
[Fig. 1] est une représentation d'un dispositif de stockage de carburant de véhicule automobile selon l'art antérieur, et
[Fig. 2] est une représentation d'un dispositif de stockage de carburant de véhicule automobile selon l'invention.

### Description détaillée

Dans la présente description, on peut indexer certains éléments ou paramètres, par exemple, premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description.

Nous faisons référence à la figure 2 illustrant un exemple de dispositif de stockage de carburant 1 de véhicule automobile selon l'invention. Les références numériques utilisées lors de la description de la figure 1 sont reprises sur la figure 2. Enfin, les figures 1 et 2 comprennent différentes flèches présentes sur les lignes de communication fluidique et représentant le sens de déplacement des fluides dans ces lignes de communication fluidique. Afin de permettre la circulation des gaz et mélanges gazeux selon les flèches présentes sur les figures 1 et 2, un ensemble d'unités anti-retour, par exemple des clapets anti-retour, sont disposées au niveau des différentes communications fluidiques. Une telle utilisation, connues de l'homme du métier et non illustrée sur les figures, ne fera pas l'objet d'une description détaillée dans la présente demande.

Selon cet exemple, le dispositif de stockage de carburant 1 comprend un réservoir de carburant 2 similaire à ceux connus de l'art antérieur. Ce dernier comprend une pompe à carburant 4, un dispositif de limite de remplissage en carburant 6 et un dispositif d'aération 8, montés en série ou séparés les uns des autres. Ces éléments sont connus ne feront pas l'objet d'une description détaillée dans la présente demande.

Un canister 10 est relié fluidiquement au réservoir et est configuré pour recevoir un mélange d'air et de vapeurs d'hydrocarbures provenant du réservoir de carburant 2. Un filtre comprenant par exemple du charbon actif et logé dans le canister 10 permet d'emprisonner des vapeurs d'hydrocarbures provenant du réservoir de carburant 2. Le canister 10 comprend en outre une prise d'air 12 permettant l'entrée ou la sortie d'air du canister 10, notamment lors de la purge de ce dernier.

Une unité de séparation 14, reliée fluidiquement au canister 10 et au réservoir de carburant 2, est configurée pour recevoir le mélange d'air et de vapeurs d'hydrocarbures provenant du canister 10 et pour séparer ledit mélange en une fraction riche en hydrocarbures et une fraction pauvre en hydrocarbures, la fraction riche en hydrocarbures étant envoyée vers le réservoir de carburant 2 (on note la présence d'un diffuseur 26 à l'extrémité de la communication fluidique s'étendant de l'unité de séparation 14 au réservoir de carburant 2). La fraction pauvre en vapeurs hydrocarbures est quant à elle envoyée au canister 10 par des moyens de retour, par exemple par une ligne de retour 18.

L'unité de séparation 14 peut être une unité de séparation membranaire. Dans un exemple de réalisation, cette membrane est une membrane de séparation des hydrocarbures utilisant un matériau ayant un coefficient de perméabilité élevé pour les vapeurs de carburant et un faible coefficient de perméabilité pour l'air. La membrane peut comporter :
- une couche de film mince non poreuse qui fait pénétrer préférentiellement les vapeurs de carburant par diffusion et dissolution, et
- une couche de membrane de support poreuse qui supporte la couche de film mince non poreuse.

La couche de film mince remplit la fonction principale de la membrane. Elle est généralement constituée d'un matériau polymère à base de silicone réticulé et insolubilisé en trois dimensions ayant une sélectivité et une perméabilité élevées aux hydrocarbures ou d'un matériau élastomère. La couche de film mince peut avoir une épaisseur d'environ 0,5 µm à 3 µm. D'autre part, une résistance élevée aux hydrocarbures est requise pour la couche de membrane de support poreuse. Par exemple, des céramiques sont utilisées en plus des résines synthétiques telles que le polyimide (PI), le polyétherimide (PEI), et le polyfluorure de vinylidène (PVDF). La membrane peut avoir une structure ayant la forme d'une plaque plate, d'une fibre creuse, d'un nid d'abeille, d'une spirale, etc.

Selon un mode de réalisation de l'invention, le dispositif de stockage de carburant 1 comprend plusieurs unités de séparation montées en série :
- une première unité de séparation, par exemple l'unité de séparation 14, étant configurée pour recevoir un mélange d'air et de vapeurs d'hydrocarbures provenant du canister 10 ;
- au moins une seconde unité de séparation (non représentée) étant configurée pour recevoir une première fraction pauvre en hydrocarbures provenant d'une autre unité de séparation, par exemple l'unité de séparation 14, et pour séparer ladite fraction pauvre en une seconde fraction riche en hydrocarbures et une seconde fraction pauvre en hydrocarbures, la fraction riche en hydrocarbures étant envoyée vers le réservoir de carburant 2.

Comme expliqué précédemment, cela permet de d'optimiser le traitement du mélange d'air et de vapeurs d'hydrocarbures afin de n'envoyer au canister 10 qu'une fraction très pauvre en vapeurs d'hydrocarbures.

Selon un autre mode de réalisation de l'invention, le dispositif de stockage de carburant 1 comprend plusieurs unités de séparation montées en parallèle, chaque unité de séparation étant configurée pour recevoir une fraction d'un mélange d'air et de vapeurs d'hydrocarbures provenant du canister 10, et pour séparer ladite fraction de mélange d'air et de vapeurs d'hydrocarbures en une fraction riche en hydrocarbures et une fraction pauvre en hydrocarbures. Ladite fraction riche en hydrocarbures est envoyée vers le réservoir de carburant 2 et ladite fraction pauvre en hydrocarbures est envoyée vers le canister 10. Selon ce mode de réalisation il y a donc plusieurs unités de séparation reliées fluidiquement à la pompe de purge 16 du canister 10. Cela permet de traiter un plus grand volume de mélange d'air et de vapeurs d'hydrocarbures de manière simultanée.

La pompe de purge 16 du canister 10 est disposée entre le canister 10 et l'unité de séparation 14. Elle permet d'extraire un mélange d'air et de vapeurs d'hydrocarbures du canister 10, lorsqu'elle est activée par suite d'une nécessité de purge du canister 10 ou de diagnostic de l'étanchéité du réservoir de carburant 2.

La pompe de purge 16 a préférentiellement un débit nominal compris entre 5 et 25 litres par minute. De manière générale, le débit nominal de la pompe de purge 16 est choisi afin que cette dernière puisse acheminer convenablement le mélange d'air et de vapeurs d'hydrocarbures à l'unité de séparation 14 ou au réservoir de carburant 2.

Préférentiellement, la pompe de purge 16 forme en outre un compresseur du mélange d'air et de vapeurs d'hydrocarbures provenant du canister 10. Comme cela est illustré sur la figure 2, il n'est donc plus nécessaire de disposer une pompe à vide 20 en aval de l'unité de séparation 14. Le différentiel de pression de part et d'autre de l'unité de séparation 14 est dès lors obtenu par une surpression en amont de l'unité de séparation 14 et non par une dépression en aval de cette dernière. Dans un exemple, la surpression et la dépression sont relatives à la pression atmosphérique.

Une électrovanne 24 est disposée entre la pompe de purge 16 et l'unité de séparation 14, l'électrovanne 24 étant configurée pour envoyer sélectivement le mélange d'air et de vapeurs d'hydrocarbures soit à l'unité de séparation 14, soit au réservoir de carburant 2. Cet envoi sélectif dépend de la nécessité ponctuelle d'une purge du canister 10 ou de vérification de l'étanchéité du réservoir de carburant 2.

L'électrovanne 24 permet de renvoyer directement le mélange d'air et de vapeurs d'hydrocarbures au réservoir de carburant 2. On comprend par « renvoyer directement », un retour du mélange d'air et de vapeurs d'hydrocarbures au réservoir de carburant 2 sans passer par une structure intermédiaire. En d'autres termes, l'électrovanne 24 est, en ce qui concerne un renvoi du mélange d'air et de vapeurs d'hydrocarbures au réservoir de carburant 2, relié à ce dernier uniquement par un conduit de liaison fluidique.

L'électrovanne 24 peut être, comme cela est visible sur la figure 2, une électrovanne trois voies. Cette dernière est dès lors reliée fluidiquement au canister 10, à l'unité de séparation 14 et au réservoir de carburant 2. Alternativement à l'utilisation d'une électrovanne trois voies, il est possible d'utiliser deux électrovannes, une première électrovanne reliant la pompe de purge 16 au réservoir de carburant 2 et une seconde électrovanne reliant la pompe de purge 16 à l'unité de séparation 14. On peut par exemple envisager un bloc comprenant deux électrovannes montées en parallèle, comprenant une admission commune, chaque électrovanne comprenant un refoulement propre relié soit au réservoir de carburant 2, soit à l'unité de séparation 14. Bien entendu, et en fonction de l'architecture de l'ensemble et plus précisément en fonction du nombre d'unités de séparation devant être reliées à la pompe de purge 16, il est possible de moduler le nombre d'électrovannes utilisées.

Il est possible de prévoir la présence d'une quatrième voie sur l'électrovanne 24 pour y raccorder la communication fluidique provenant de la partie de l'unité de séparation 14 recueillant la fraction riche en hydrocarbures afin d'utiliser la communication fluidique déjà existante entre l'électrovanne 24 et le réservoir de carburant 2 pour envoyer cette fraction riche en hydrocarbures au réservoir de carburant 2.

L'électrovanne 24 comprend dès lors quatre voies. Elle est reliée fluidiquement au canister 10 (pour recevoir le mélange d'air et de vapeurs d'hydrocarbures), deux fois à l'unité de séparation 14 (pour y envoyer le mélange d'air et de vapeurs d'hydrocarbures et pour recevoir la fraction riche en hydrocarbures), et au réservoir de carburant 2 (pour y envoyer le mélange d'air et de vapeurs d'hydrocarbures en cas de test d'étanchéité du réservoir de carburant 2 ou la fraction riche en hydrocarbures en cas de purge du canister 10). L'électrovanne 24 peut être une électrovanne quatre voies. Il peut également s'agir de plusieurs électrovannes. Le pilotage de l'électrovanne 24 est dès lors programmé pour que les configurations d'ouverture de cette dernière correspondent à l'acheminement souhaité.

L'ensemble formé par l'unité de séparation 14, la pompe de purge 16 et l'électrovanne 24 forme un dispositif de gestion d'un mélange d'air et de vapeurs d'hydrocarbures issu du canister 10 de véhicule automobile.

Il est possible de prévoir une unité de contrôle électronique 28 de l'état de fonctionnement de la pompe de purge 16 ainsi que de la configuration d'ouverture de l'électrovanne 24. Il est dès lors possible de piloter par l'intermédiaire d'une même unité de contrôle électronique 28 le fonctionnement de la pompe de purge 16 et l'électrovanne 24, afin d'activer la pompe de purge 16 et de placer l'électrovanne 24 dans une configuration d'ouverture en adéquation avec une nécessité de purge du canister 10 ou de vérification de l'étanchéité du réservoir de carburant 2. Afin d'assurer une performance constante de l'unité de séparation 14, il faut maintenir constant le différentiel de pression de part et d'autre de l'unité de séparation 14, pour cela il suffit de maintenir constante la pression en amont de l'unité de séparation 14. Dans un exemple, l'unité de contrôle électronique 28 pilote la pompe de purge 16 de manière à maintenir constante la pression en amont de l'unité de séparation 14, par exemple à trois bars. L'unité de contrôle électronique 28 comprend dès lors un programme de contrôle prédéterminé stocké sur une mémoire non volatile, et un processeur contrôlant la pompe de purge 16 et l'électrovanne 24 sur la base du programme de contrôle prédéterminé. Il est également possible que l'unité de contrôle électronique 28 permette, par interaction avec un capteur de pression interne du réservoir de carburant 2 (non représenté), de surveiller l'évolution de la pression dans le réservoir de carburant 2 par suite de l'acheminement du mélange d'air et de vapeurs d'hydrocarbures depuis le canister 10 vers le réservoir de carburant 2.

La pompe de purge 16 peut, selon un mode de réalisation non représenté, être une pompe bidirectionnelle capable d'envoyer le mélange d'air et de vapeurs d'hydrocarbures du canister 10 à l'unité de séparation 14 et la fraction pauvre en hydrocarbures de l'unité de séparation 14 au canister 10. Dès lors, il est possible de se passer de la ligne de retour 18. L'électrovanne 24 est pilotée de manière à permettre ce passage (sa configuration d'ouverture est la même pour les deux acheminements précités). L'unité de contrôle électronique 28 permet dans ce cas un pilotage particulier de la pompe de purge 16. Cette dernière envoie dans un premier temps le mélange d'air et de vapeurs d'hydrocarbures du canister 10 à l'unité de séparation 14, maintient une pression en amont de l'unité de séparation 14 supérieure à la pression en aval (dans le cas où il n'y a pas de pompe à vide en aval de cette dernière), et enfin, par une inversion du fonctionnement de la pompe de purge 16, extrait la fraction pauvre en hydrocarbures de l'unité de séparation 14 afin de l'envoyer au canister 10.

Une troisième électrovanne (non représentée, en complément d'une électrovanne 24 ou de deux électrovannes comme décrit précédemment) peut être disposée sur une liaison fluidique entre le réservoir de carburant 2 et le canister 10. Cette dernière peut être fermée (par exemple en étant contrôlée par l'unité de contrôle électronique 28) lors du diagnostic de l'étanchéité du réservoir de carburant pour empêcher le passage de gaz de ce dernier au canister 10.

En ce qui concerne le procédé de gestion d'un mélange d'air et de vapeurs d'hydrocarbures issu d'un canister 10, ce dernier comprend les étapes suivantes :
- contrôle de la configuration d'ouverture de l'électrovanne 24 (ou des électrovannes) pour permettre le passage sélectif du mélange d'air et de vapeurs d'hydrocarbures soit directement vers le réservoir de carburant 2 en cas de test d'étanchéité de ce dernier, soit vers l'unité de séparation 14 en cas de purge du canister 10. Cela peut être effectué par l'unité de contrôle électronique 28,
- activation de la pompe de purge 16 du canister 10. Cette dernière va donc extraire le mélange d'air et de vapeurs d'hydrocarbures du canister 10 et ce, quelle que soit la destination de ce dernier, et
- acheminement du mélange d'air et de vapeurs d'hydrocarbures du canister 10 soit à l'unité de séparation 14, soit directement au réservoir de carburant 2 en fonction de la configuration d'ouverture de l'électrovanne 24. Cela permet, en fonction de la configuration d'ouverture de l'électrovanne 24 (ou des électrovannes) de traiter le mélange d'air et de vapeurs d'hydrocarbures via une ou plusieurs unités de séparation ou d'augmenter la pression interne du réservoir de carburant 2.

En cas de purge du canister 10 avec traitement du mélange d'air et de vapeurs d'hydrocarbures par l'unité de séparation 14, le compresseur de la pompe de purge 16 peut être activé (par exemple par l'unité de contrôle électronique 28) afin d'obtenir le différentiel de pression de part et d'autre de l'unité de séparation 14 comme décrit précédemment.

Par ailleurs, il est possible de fermer la troisième électrovanne disposée sur la liaison fluidique entre le réservoir de carburant 2 et le canister 10 lorsque l'électrovanne 24 est configurée pour permettre le passage du mélange d'air et de vapeurs d'hydrocarbures du canister 10 au réservoir de carburant 2, pour les raisons d'augmentation de pression interne du réservoir de carburant 2 décrites précédemment.

### Liste de références

- 1: : dispositif de stockage de carburant
- 2: : réservoir de carburant
- 4: : pompe à carburant
- 6: : dispositif de limite de remplissage
- 8: : dispositif d'aération
- 10: : canister
- 12: : prise d'air
- 14: : unité de séparation
- 16: : pompe de purge
- 18: : ligne de retour
- 20: : pompe à vide
- 22: : pompe de diagnostic
- 24: : électrovanne
- 26: : diffuseur
- 28: : unité de contrôle électronique

## Revendications

1. Dispositif de stockage de carburant (1) de véhicule automobile comprenant :
- un réservoir de carburant (2),
- un canister (10) relié fluidiquement au réservoir de carburant (2) et configuré pour recevoir un mélange d'air et de vapeurs d'hydrocarbures provenant du réservoir de carburant (2),
- au moins une unité de séparation (14) reliée fluidiquement au canister (10) et au réservoir de carburant (2), l'unité de séparation (14) étant configurée pour recevoir le mélange d'air et de vapeurs d'hydrocarbures provenant du canister (10) et pour séparer ledit mélange en une fraction riche en hydrocarbures et une fraction pauvre en hydrocarbures, la fraction riche en hydrocarbures étant envoyée vers le réservoir de carburant (2),
- des moyens de retour (18) de la fraction pauvre en hydrocarbures vers le canister (10),
- une pompe de purge (16) du canister (10) disposée entre le canister (10) et l'unité de séparation (14),
- au moins une électrovanne (24) disposée entre la pompe de purge (16) et l'unité de séparation (14), **caractérisé en ce que** ladite au moins une électrovanne (24) est configurée pour envoyer sélectivement le mélange d'air et de vapeurs d'hydrocarbures soit à l'unité de séparation (14), soit directement au réservoir de carburant (2).

2. Dispositif de stockage de carburant (1) selon la revendication précédente dans lequel l'unité de séparation (14) est une unité de séparation membranaire.

3. Dispositif de stockage de carburant (1) selon l'une quelconque des revendications 1 à 2, dans lequel la pompe de purge (16) forme en outre un compresseur du mélange d'air et de vapeurs d'hydrocarbures provenant du canister (10).

4. Dispositif de stockage de carburant (1) selon l'une quelconque des revendications précédentes, dans lequel ladite au moins une électrovanne (24) est une électrovanne trois voies.

5. Dispositif de stockage de carburant (1) selon l'une quelconque des revendications 1 à 3, dans lequel ladite au moins une électrovanne (24) comprend deux électrovannes, une première électrovanne reliant la pompe de purge (16) au réservoir de carburant (2) et une seconde électrovanne reliant la pompe de purge (16) à l'unité de séparation (14).

6. Dispositif de stockage de carburant (1) selon l'une quelconque des revendications précédentes, dans lequel la pompe de purge (16) a un débit nominal compris entre 5 et 25 litres par minute.

7. Dispositif de stockage de carburant (1) selon l'une quelconque des revendications précédentes, comprenant une unité de contrôle électronique (28) de l'état de fonctionnement de la pompe de purge (16) ainsi que de la configuration d'ouverture de ladite au moins une électrovanne (24).

8. Dispositif de stockage de carburant (1) selon l'une quelconque des revendications précédentes, comprenant plusieurs unités de séparation (14) montées en série, une première unité de séparation (14) étant configurée pour recevoir un mélange d'air et de vapeurs d'hydrocarbures provenant du canister (10), au moins une seconde unité de séparation étant configurée pour recevoir une première fraction pauvre en hydrocarbures provenant d'une autre unité de séparation et pour séparer ladite fraction pauvre en une seconde fraction riche en hydrocarbures et une seconde fraction pauvre en hydrocarbures, la fraction riche en hydrocarbures étant envoyée vers le réservoir de carburant (2).

9. Dispositif de stockage de carburant (1) selon l'une quelconque des revendications 1 à 7, comprenant plusieurs unités de séparation (14) montées en parallèle, chaque unité de séparation (14) étant configurée pour recevoir une fraction d'un mélange d'air et de vapeurs d'hydrocarbures provenant du canister (10) et pour séparer ladite fraction de mélange d'air et de vapeurs d'hydrocarbures en une fraction riche en hydrocarbures et une fraction pauvre en hydrocarbures, ladite fraction riche en hydrocarbures étant envoyée vers le réservoir de carburant (2) et ladite fraction pauvre en hydrocarbures étant envoyée vers le canister (10).

10. Dispositif de stockage de carburant (1) selon l'une quelconque des revendications précédentes, comprenant une troisième électrovanne disposée sur une liaison fluidique entre le réservoir de carburant (2) et le canister (10).

11. Procédé de gestion d'un mélange d'air et de vapeurs d'hydrocarbures issu d'un canister (10) d'un dispositif de stockage de carburant (1) selon l'une quelconque des revendications précédentes, le procédé comprenant les étapes suivantes :
- contrôle de la configuration d'ouverture de ladite au moins une électrovanne (24) pour permettre le passage sélectif du mélange d'air et de vapeurs d'hydrocarbures soit directement vers le réservoir de carburant (2) en cas de test d'étanchéité du réservoir de carburant (2), soit vers l'unité de séparation (14) en cas de purge du canister (10),
- activation de la pompe de purge (16) du canister (10), et
- acheminement du mélange d'air et de vapeurs d'hydrocarbures du canister (10) soit à l'unité de séparation (14), soit directement au réservoir de carburant (2) en fonction de la configuration d'ouverture de ladite au moins une électrovanne (24).

12. Procédé de gestion d'un mélange d'air et de vapeurs d'hydrocarbures selon la revendication 11, comprenant une étape d'activation du compresseur de la pompe de purge (16) lorsque ladite au moins une électrovanne (24) est configurée pour permettre le passage du mélange d'air et de vapeurs d'hydrocarbures du canister (10) à l'unité de séparation (14).

13. Procédé de gestion d'un mélange d'air et de vapeurs d'hydrocarbures selon l'une quelconque des revendications 11 à 12, comprenant une étape de fermeture d'une troisième électrovanne disposée sur une liaison fluidique entre le réservoir de carburant (2) et le canister (10) lorsque ladite au moins une électrovanne (24) est configurée pour permettre le passage du mélange d'air et de vapeurs d'hydrocarbures du canister (10) au réservoir de carburant (2).

14. Dispositif de gestion d'un mélange d'air et de vapeurs d'hydrocarbures issu d'un canister (10) de véhicule automobile, le dispositif de gestion comprenant :
- au moins une unité de séparation (14) d'air et de vapeurs d'hydrocarbures configurée pour recevoir le mélange d'air et de vapeurs d'hydrocarbures provenant du canister (10) et pour séparer ledit mélange en une fraction riche en hydrocarbures et une fraction pauvre en hydrocarbures, la fraction riche en hydrocarbures étant envoyée à un réservoir de carburant (2),
- une pompe de purge (16) du canister (10) configurée pour envoyer le mélange d'air et de vapeurs d'hydrocarbures du canister (10) à l'unité de séparation (14), et
- au moins une électrovanne (24) disposée entre la pompe de purge (16) et l'unité de séparation (14), **caractérisé en ce que** ladite au moins une électrovanne (24) est configurée pour envoyer sélectivement le mélange d'air et de vapeurs d'hydrocarbures soit à l'unité de séparation (14), soit directement au réservoir de carburant (2).

## Patentansprüche

1. Kraftstoffspeichervorrichtung (1) eines Kraftfahrzeugs mit:
- einem Kraftstofftank (2),
- einem Kanister (10), der fluidisch mit dem Kraftstofftank (2) verbunden und konfiguriert ist, ein Gemisch aus Luft und Kohlenwasserstoffdämpfen aus dem Kraftstofftank (2) aufzunehmen,
- mindestens eine Trenneinheit (14), die fluidisch mit dem Kanister (10) und dem Kraftstofftank (2) verbunden ist, wobei die Trenneinheit (14) konfiguriert ist, das Gemisch aus Luft und Kohlenwasserstoffdämpfen aus dem Kanister (10) aufzunehmen und das Gemisch in eine kohlenwasserstoffreiche Fraktion und eine kohlenwasserstoffarme Fraktion zu trennen, wobei die kohlenwasserstoffreiche Fraktion in den Kraftstofftank (2) geleitet wird,
- Mittel (18) zur Rückführung der an Kohlenwasserstoffen armen Fraktion in den Kanister (10),
- einer Entlüftungspumpe (16) des Kanisters (10), die zwischen dem Kanister (10) und der Trenneinheit (14) angeordnet ist,
- mindestens einem Magnetventil (24), das zwischen der Entlüftungspumpe (16) und der Trenneinheit (14) angeordnet ist, **dadurch gekennzeichnet, dass** das mindestens eine Magnetventil (24) konfiguriert ist, das Gemisch aus Luft und Kohlenwasserstoffdämpfen selektiv entweder der Trenneinheit (14) oder direkt dem Kraftstofftank (2) zuzuführen.

2. Kraftstoffspeichervorrichtung (1) nach dem vorhergehenden Anspruch, wobei die Trenneinheit (14) eine Membrantrenneinheit ist.

3. Kraftstoffspeichervorrichtung (1) nach einem der Ansprüche 1 bis 2, wobei die Entlüftungspumpe (16) zusätzlich einen Kompressor für das Gemisch aus Luft und Kohlenwasserstoffdämpfen aus dem Kanister (10) bildet.

4. Kraftstoffspeichervorrichtung (1) nach einem der vorhergehenden Ansprüche, wobei das mindestens eine Magnetventil (24) ein Dreiwege-Magnetventil ist.

5. Kraftstoffspeichervorrichtung (1) nach einem der Ansprüche 1 bis 3, wobei das mindestens eine Magnetventil (24) zwei Magnetventile aufweist, ein erstes Magnetventil, das die Entlüftungspumpe (16) mit dem Kraftstofftank (2) verbindet, und ein zweites Magnetventil, das die Entlüftungspumpe (16) mit der Trenneinheit (14) verbindet.

6. Kraftstoffspeichervorrichtung (1) nach einem der vorhergehenden Ansprüche, wobei die Entlüftungspumpe (16) einen Nenndurchfluss zwischen 5 und 25 Litern pro Minute hat.

7. Kraftstoffspeichervorrichtung (1) nach einem der vorhergehenden Ansprüche, aufweisend eine elektronische Steuereinheit (28) für den Betriebszustand der Entlüftungspumpe (16) sowie für die Öffnungskonfiguration des mindestens einen Magnetventils (24).

8. Kraftstoffspeichervorrichtung (1) nach einem der vorhergehenden Ansprüche, aufweisend mehrere in Reihe geschaltete Trenneinheiten (14), wobei eine erste Trenneinheit (14) konfiguriert ist, ein Gemisch aus Luft und Kohlenwasserstoffdämpfen aus dem Kanister (10) aufzunehmen, und die Fraktion des Gemischs aus Luft und Kohlenwasserstoffdämpfen in eine kohlenwasserstoffreiche Fraktion und eine kohlenwasserstoffarme Fraktion zu trennen, wobei die kohlenwasserstoffreiche Fraktion dem Kraftstofftank (2) und die kohlenwasserstoffarme Fraktion dem Kanister (10) zugeführt wird.

9. Kraftstoffspeichervorrichtung (1) nach einem der Ansprüche 1 bis 7, aufweisend mehrere parallel geschaltete Trenneinheiten (14), wobei jede Trenneinheit (14) konfiguriert ist, eine Fraktion eines Gemischs aus Luft und Kohlenwasserstoffdämpfen aus dem Kanister (10) aufzunehmen und die Fraktion des Gemischs aus Luft und Kohlenwasserstoffdämpfen in eine kohlenwasserstoffreiche Fraktion und eine kohlenwasserstoffarme Fraktion aufzutrennen, wobei die kohlenwasserstoffreiche Fraktion zum Kraftstofftank (2) geleitet wird und die kohlenwasserstoffarme Fraktion zum Kanister (10) geleitet wird.

10. Kraftstoffspeichervorrichtung (1) nach einem der vorhergehenden Ansprüche, die ein drittes Magnetventil aufweist, das an einer Fluidverbindung zwischen dem Kraftstofftank (2) und dem Kanister (10) angeordnet ist.

11. Verfahren zur Verwaltung eines Gemischs aus Luft und Kohlenwasserstoffdämpfen, das aus einem Kanister (10) einer Kraftstoffspeichervorrichtung (1) nach einem der vorhergehenden Ansprüche stammt, wobei das Verfahren die folgenden Schritte aufweist:
- Steuerung der Öffnungskonfiguration des mindestens einen Magnetventils (24), um den selektiven Durchgang des Gemischs aus Luft und Kohlenwasserstoffdämpfen entweder direkt zum Kraftstofftank (2) im Fall einer Dichtheitsprüfung des Kraftstofftanks (2) oder zur Trenneinheit (14) im Fall einer Entlüftung des Kanisters (10) zu ermöglichen,
- Aktivierung der Entlüftungspumpe (16) des Kanisters (10) und
- Leiten des Gemischs aus Luft und Kohlenwasserstoffdämpfen aus dem Kanister (10) entweder zur Trenneinheit (14) oder direkt zum Kraftstofftank (2) in Abhängigkeit von der Öffnungskonfiguration des mindestens einen Magnetventils (24).

12. Verfahren zur Verwaltung einer Mischung aus Luft und Kohlenwasserstoffdämpfen nach Anspruch 11, das einen Schritt zur Aktivierung des Kompressors der Entlüftungspumpe (16) aufweist, wenn das mindestens eine Magnetventil (24) so konfiguriert ist, dass es den Durchgang der Mischung aus Luft und Kohlenwasserstoffdämpfen aus dem Kanister (10) zur Trenneinheit (14) ermöglicht.

13. Verfahren zum Verwalten einer Mischung aus Luft und Kohlenwasserstoffdämpfen nach einem der Ansprüche 11 bis 12, aufweisend einen Schritt des Schließens eines dritten Magnetventils, das an einer Fluidverbindung zwischen dem Kraftstofftank (2) und dem Kanister (10) angeordnet ist, wenn das mindestens eine Magnetventil (24) so konfiguriert ist, dass es den Durchgang der Mischung aus Luft und Kohlenwasserstoffdämpfen vom Kanister (10) zum Kraftstofftank (2) ermöglicht.

14. Vorrichtung zur Verwaltung eines Gemischs aus Luft und Kohlenwasserstoffdämpfen, das aus einem Kanister (10) eines Kraftfahrzeugs stammt, wobei die Verwaltungsvorrichtung aufweist:
- mindestens eine Einheit (14) zur Trennung von Luft und Kohlenwasserstoffdämpfen, die konfiguriert ist, das Gemisch aus Luft und Kohlenwasserstoffdämpfen aus dem Kanister (10) aufzunehmen und das Gemisch in eine kohlenwasserstoffreiche Fraktion und eine kohlenwasserstoffarme Fraktion zu trennen, wobei die kohlenwasserstoffreiche Fraktion zu einem Kraftstofftank (2) geleitet wird,
- eine Entlüftungspumpe (16) des Kanisters (10), die konfiguriert ist, das Gemisch aus Luft und Kohlenwasserstoffdämpfen aus dem Kanister (10) zur Trenneinheit (14) zu leiten, und
- mindestens ein Magnetventil (24), das zwischen der Entlüftungspumpe (16) und der Trenneinheit (14) angeordnet ist, **dadurch gekennzeichnet, dass** das mindestens eine Magnetventil (24) konfiguriert ist, das Gemisch aus Luft und Kohlenwasserstoffdämpfen wahlweise entweder der Trenneinheit (14) oder direkt dem Kraftstofftank (2) zuzuführen.

## Claims

1. Motor vehicle fuel storage system (1) comprising:
- a fuel tank (2),
- a canister (10) fluidically connected to the fuel tank (2) and configured to receive a mixture of air and hydrocarbon vapours from the fuel tank (2),
- at least one separation unit (14) fluidically connected to the canister (10) and the fuel tank (2), the separation unit (14) being configured to receive the mixture of air and hydrocarbon vapours from the canister (10) and to separate said mixture into a hydrocarbon-rich fraction and a hydrocarbon-poor fraction, the hydrocarbon-rich fraction being sent to the fuel tank (2),
- means of return (18) of the hydrocarbon-poor fraction to the canister (10),
- a purge pump (16) of the canister (10) arranged between the canister (10) and the separation unit (14),
- at least one solenoid valve (24) arranged between the purge pump (16) and the separation unit (14), **characterised in that** said at least one solenoid valve (24) is configured to selectively send the mixture of air and hydrocarbon vapours either to the separation unit (14) or directly to the fuel tank (2).

2. Fuel storage device (1) according to the preceding claim wherein the separation unit (14) is a membrane separation unit.

3. Fuel storage device (1) according to any one of claims 1 to 2, wherein the purge pump (16) further forms a compressor for the mixture of air and hydrocarbon vapours from the canister (10).

4. Fuel storage device (1) according to any one of the preceding claims, wherein said at least one solenoid valve (24) is a three-way solenoid valve.

5. Fuel storage device (1) according to any one of claims 1 to 3, wherein said at least one solenoid valve (24) comprises two solenoid valves, a first solenoid valve connecting the purge pump (16) to the fuel tank (2) and a second solenoid valve connecting the purge pump (16) to the separation unit (14).

6. Fuel storage device (1) according to any one of the preceding claims, wherein the purge pump (16) has a nominal flow rate between 5 and 25 litres per minute.

7. Fuel storage device (1) according to any one of the preceding claims, comprising an electronic control unit (28) of the operating status of the purge pump (16) and the of opening configuration of said at least one solenoid valve (24).

8. Fuel storage device (1) according to any one of the preceding claims, comprising several separation units (14) assembled in series, a first separation unit (14) being configured to receive a mixture of air and hydrocarbon vapours from the canister (10), at least a second separation unit being configured to receive a first hydrocarbon-poor fraction from another separation unit and separating said fraction a second hydrocarbon-rich fraction and a second hydrocarbon-rich fraction, the hydrocarbon-rich fraction being sent to the fuel tank (2).

9. Fuel storage device (1) according to any one of claims 1 to 7, comprising several separation units (14) mounted in parallel, each separation unit (14) being configured to receive a fraction of a mixture of air and hydrocarbon vapours from the canister (10) and to separate said fraction of the mixture of air and hydrocarbon vapours into a hydrocarbon-rich fraction and a hydrocarbon-poor fraction, said hydrocarbon-rich fraction being sent to the fuel tank (2) and said hydrocarbon-poor fraction being sent to the canister (10).

10. Fuel storage device (1) according to any one of the preceding claims, comprising a third solenoid valve disposed on a fluidic bond between the fuel tank (2) and the canister (10).

11. Method for managing a mixture of air and hydrocarbon vapours from a canister (10) of a fuel storage device (1) according to any one of the preceding claims, the method comprising the following steps:
- checking the opening configuration of said at least one solenoid valve (24) to allow the selective passage of the mixture of air and hydrocarbon vapours either directly to the fuel tank (2) in the case of a leak test of the fuel tank (2) or to the separation unit (14) in the case of purging of the canister (10),
- activation of the canister purge pump (16) (10), and
- conveying the mixture of air and hydrocarbon vapours from the canister (10) either to the separation unit (14) or directly to the fuel tank (2) depending on the opening configuration of said at least one solenoid valve (24).

12. Method for managing a mixture of air and hydrocarbon vapours according to claim 11, comprising a step for activating the compressor of the purge pump (16) when said at least one solenoid valve (24) is configured to allow the mixture of air and hydrocarbon vapours to pass from the canister (10) to the separation unit (14).

13. Method for managing a mixture of air and hydrocarbon vapours according to any one of claims 11 to 12, comprising a step for closing a third solenoid valve disposed on a fluidic bond between the fuel tank (2) and the canister (10) when said at least one solenoid valve (24) is configured to allow the mixture of air and hydrocarbon vapours to pass from the canister (10) to the fuel tank (2).

14. Device for managing a mixture of air and hydrocarbon vapours from a canister (10) of a motor vehicle, the management device comprising:
- at least one air and hydrocarbon vapour separation unit (14) configured to receive the mixture of air and hydrocarbon vapours from the canister (10) and to separate said mixture into a hydrocarbon-rich fraction and a hydrocarbon-poor fraction, the hydrocarbon-rich fraction being sent to a fuel tank (2),
- a purge pump (16) of the canister (10) configured to send the mixture of air and hydrocarbon vapours from the canister (10) to the separation unit (14), and
- at least one solenoid valve (24) arranged between the purge pump (16) and the separation unit (14), **characterised in that** said at least one solenoid valve (24) is configured to selectively send the mixture of air and hydrocarbon vapours either to the separation unit (14) or directly to the fuel tank (2).
